# EUROPÄISCHE PATENTSCHRIFT

(11) **EP 1 045 781 B1**
(45) Veröffentlichungstag und Bekanntmachung des Hinweises auf die Patenterteilung: **24.02.2010**
(21) Anmeldenummer: 98965856.2
(22) Anmeldetag: 21.12.1998
(51) Int. Cl.: B60T 8/00

(54) **VERFAHREN UND BREMSANLAGE ZUR REGELUNG DER FAHRSTABILITÄT EINES KRAFTFAHRZEUGS**
METHOD AND BRAKING SYSTEM FOR REGULATING THE DRIVING STABILITY OF A MOTOR VEHICLE
PROCEDE ET SYSTEME DE FREINAGE DESTINES A LA REGULATION DE LA STABILITE D'UN VEHICULE

(30) Priorität: 30.12.1997 DE 19758074
(43) Veröffentlichungstag der Anmeldung: 25.10.2000
(73) Patentinhaber: Continental Teves AG & Co. oHG, 60488 Frankfurt (DE)
(72) Erfinder: FENNEL, Helmut, D-65812 Bad Soden (DE)
(86) Internationale Anmeldenummer: PCT/EP1998/008355
(87) Internationale Veröffentlichungsnummer: WO 1999/035016

(56) Entgegenhaltungen:
- DE-A- 4 317 790
- DE-A- 19 626 406
- US-A- 5 691 900

## Beschreibung

Die Erfindung betrifft ein Verfahren zur Verbesserung des Regelverhaltens eines elektronisch geregelten oder gesteuerten ESP-Fahrstabilitätsregelungssystems bei niedrigen Außen- oder Betriebstemperaturen, bei dem aus dem Drehverhalten der Räder Eingangsgrößen für die Regelung abgeleitet werden und bei dem in für die Fahrstabilität kritischen Situationen die Fahrstabilität durch Bremsdruckeinsteuerung und/oder Bremsdruckmodulation in einer Bremsanlage erhöht wird. Eine Bremsanlage zur Durchführung des Verfahrens ist ebenso Gegenstand der Erfindung.

Aus der gattungsgemäßen deutschen Offenlegungsschrift DE 37 31 756 A1 ist beispielsweise ein Verfahren zur Regelung der Fahrstabilität eines Kraftfahrzeugs bekannt. Bei diesem Verfahren zu Regelung der Fahrstabilität eines Kraftfahrzeugs wird ein Grenzwertverlauf der Giergeschwindigkeit, der zusätzlich von der Fahrzeuggeschwindigkeit und vom Reibwert beeinflußt wird, in Abhängigkeit vom Lenkwinkel ausgewertet. Ausgehend von diesem Grenzwertverlauf werden Kriterien festgelegt, bei denen eine Bremsdruckeinsteuerung und/oder Bremsdruckmodulation erfolgt.

Bei den bekannten Verfahren zur Regelung der Fahrstabilität eines Kraftfahrzeugs ist eine Vorladung zur Erreichung einer zufriedenstellenden Systemdynamik, insbesondere bei niedrigen Temperaturen notwendig. Diese Vorladefunktion übernimmt z.B. ein elektrisch betätigbarer (aktiver) Bremskraftverstärker oder eine hydraulische Vorladepumpe. Da die Viskosität der Bremsflüssigkeit bei niedrigen Temperaturen steigt, ist diese Maßnahme erforderlich, um eine sichere und gleichbleibende Anwendung des Verfahrens zur Regelung der Fahrstabilität eines Kraftfahrzeug auch bei niedrigen Temperaturen zu gewährleisten.

Weiterhin ist aus der US-A-5 691 900 eine sogenannte ABSplus-Regelung bekannt. Bei der ABSplus-Regelung wird über das Drehverhalten der Räder ermittelt, ob eine Drehung des Fahrzeugs, z.B. in µ-split Situationen, vorliegt. Bei einem ABS-System tritt die Regelung immer nur dann auf, wenn der Fahrer über Bremspedal, Hauptbremszylinder und Ventilblock Bremsdruck in die Radbremsen einsteuert.

ABSplus führt dabei einen vom Fahrer abhängigen Druckaufbau in den Radbremsen durch. Der Fahrer entscheidet wann und wie viel Bremsdruck in die Radbremsen eingesteuert wird. ABSplus verteilt dann den Bremsdruck in den Radbremsen über die Ansteuerung der Ventile in Abhängigkeit von den Raddrehzahlsignalen. ABS weist zwar eine Pumpe auf, mit dieser wird jedoch nur das Druckmedium in den Behälter zurückgefördert.

Der vorliegenden Erfindung liegt daher die Aufgabe zugrunde, ein Verfahren zur Regelung der Fahrstabilität eines Fahrzeugs der eingangs genannten Art derart weiterzubilden, daß auf eine Vorladung verzichtet werden kann. Dennoch soll auch bei niedrigen Temperaturen die Funktionsfähigkeit ohne Einschränkung gewährleistet sein. Weiterhin ist es Aufgabe der vorliegenden Erfindung eine Bremsanlage zur Durchführung des Verfahrens zur Regelung der Fahrstabilität aufzuzeigen.

Die erfindungsgemäße Lösung dieser Aufgabe erfolgt dadurch, dass aus dem Drehverhalten der Räder Kriterien zum Bewerten der Fahrsituation und zum frühzeitigen Ermitteln einer Fahrsituation mit einer erhöhten Gefährdung aus den Differenzen des Drehverhaltens der Räder untereinander abgeleitet werden, dass das relative Drehverhalten der einzelnen Räder mit vorgegebenen Schemata verglichen wird und dass beim Überschreiten vorgegebener Grenzwerte auf ein Erkennen einer Fahrsituation mit erhöhter Gefährdung geschlossen und ein Druckaufbau im hydraulischen Bremssystem vorbereitet wird. Es werden somit aus dem Drehverhalten der Räder Kriterien zum Bewerten der Fahrsituation und zum frühzeitigen Ermitteln einer Fahrsituation mit einer erhöhten Gefährdung abgeleitet. Wird eine Fahrsituation mit erhöhter Gefährdung der Fahrstabilität erkannt, wird das Einsetzen der Fahrstabilitätsregelung vorbereitet. Die Bewertung und das Ableiten von Kriterien einer Fahrsituation aufgrund des Rad-Drehverhaltens kann mit einem deutlichen Zeitvorteil gegenüber den üblicherweise verwendeten Sensoren, wie z.B. einem Gierraten - oder einem Querbeschleunigungssensor erfolgen, da durch diese die Reaktion des Fahrzeugaufbaus auf Fahrmanöver und Fahrsituationen erfaßt wird. Dahingegen ist die Reaktion der Fahrzeugräder-Räder deutlich früher verfügbar und diese deutlich kürzere Zeitkonstante für einen möglicherweise folgende Regelungsvorgang maßgeblich.

Vorteilhafte Aus- und Weiterbildungen der Erfindung sind in den Unteransprüchen ausgeführt.

In einer bevorzugten Ausführungsform der Erfindung können Kriterien zum Bewerten der Fahrsituation durch Erkennen von Differenzen zwischen dem Drehverhalten der Räder festgelegt werden. Mit dem frühzeitigen Ermitteln einer Fahrsituation mit einer erhöhten Gefährdung durch Erkennen von Differenzen zwischen dem Drehverhalten der Räder kann ein weiteres Kriterium verfügbar gemacht werden. Zudem kann eine Eingriffsschwelle aus den ermittelten Kriterien abgeleitet werden. Dies ist z.B. durch eine rechnergestützte Weiterverarbeitung aufgrund vorgegebener fester oder variabler Muster der durch die Raddrehzahlsensoren ermittelten Rad-Drehzahlen möglich.

Mit Vorteil wird beim Überschreiten der Eingriffsschwelle das Einsetzen der Fahrstabilitätsregelung vorbereitet. Von dem Rechner, der die Eingriffsschwellen berechnet, kann über eine geeignete Schnittstelle ein Signal zum Einsetzen und/oder Reglerhydraulik übertragen werden.

Beim Überschreiten der Eingriffschwelle kann ein Druckaufbau in einem hydraulischen Bremssystem vorbereitet werden. Dies kann durch das Einschalten z.B. einer Hydraulikpumpe, die in einem derartigen Bremssystem meist ohnehin vorhanden ist, erfolgen.

Eine bevorzugte Ausführungsform einer Bremsanlage zur Durchführung des Verfahrens zur Regelung der Fahrstabilität eines Kraftfahrzeugs kann hydraulisch betätigten Radbremsen und eine Hydraulikpumpe aufweisen, die getaktet angesteuert ist.

Die Taktfrequenz der Hydraulikpumpe kann vorteilhafterweise beim Überschreiten der Eingriffsschwelle erhöht werden. Dadurch ist eine weichere Regelung möglich, die aus Komfortgründen anzustreben ist.

Weitere Einzelheiten und Vorteile der Erfindung ergeben sich aus der nachfolgenden Beschreibung und den zeichnerischen Darstellungen einer bevorzugten Ausführungsform des erfindungsgemäßen Verfahrens zur Regelung der Fahrstabilität eines Kraftfahrzeugs. In den Zeichnungen zeigen:
- Fig. 1: eine Veranschaulichung des erfindungsgemäßen Verfahrens zur Regelung der Fahrstabilität eines Kraftfahrzeugs bei Kurvenfahrt,
- Fig. 2: ein Blockschaltbild eines beispielhaften Reglersystems

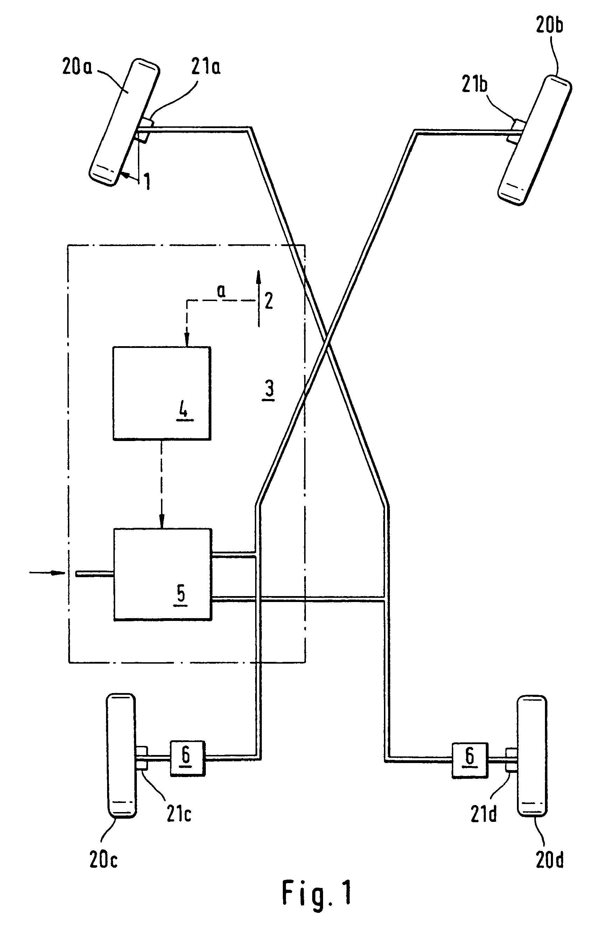

In Figur 1 ist eine Konfiguration eines Systems zur Regelung der Fahrstabilität eines Kraftfahrzeug gezeigt. Ein Meßwertaufnehmer für die Fahrzeugbeschleunigung in Längsrichtung 2 befindet sich im Schwerpunkt eines Fahrzeugs. An den vier Rädern 20 a,b,c,d des Fahrzeugs befinden sich Sensoren 21 a,b,c,d zur Aufnahme der jeweiligen Rad-Drehzahlen. In einem Schaltgerät 4 auf Mikroprozessorbasis werden durch Verknüpfung Stellsignale für einen Druckmodulator 5 berechnet. Der Druckmodulator 5, der z.B. die Hydraulikpumpe eines ABS-Systems ist, kann den Druck in beiden Bremskreisen synchron ändern. Entsprechend der serienmäßigen Ausstattung des Fahrzeugs können Vorrichtungen vorhanden sein, die ein geeignetes Bremsdruckverhältnis zwischen Vorder- und Hinterachse einstellen. Das können z.B. ein oder zwei lastabhängige Bremsdruckminderer 6 sein. Ein Vorteil dieser Anordnung ist, daß sich die komplette Anlage 3 in einem Block zusammenfassen läßt, welcher einen bereits vorhandenen Bremskraftverstärker ersetzen kann, ohne daß weitere Änderungen an der Bremsanlage erforderlich sind.

Auf Basis der Radsensorsignalauswertung wird eine Kurvenfahrterkennung durchgeführt und die jeweilige Fahrsituation analysiert. Beim Auftreten gewisser vorgegebener Kombinationen von Rad-Drehzahlen wird der Druckmodulator 5 angesteuert und es erfolgt schon ein geringer Druckaufbau im Bremskreislauf. Der Regler wartet dann einen Druckaufbauimpuls fester oder variabler Länge ab, bis die Ableitung der gefilterten Fahrzeugbeschleunigung einen Minimalwert (negativ) annimmt. Nun wird aus der gemessenen Höhe des Drucksprungs eine Grenze berechnet, die von der Ableitung der gefilterten Fahrzeugbeschleunigung unterschritten werden muß, damit ein weiterer Druckaufbau und Druckaufbauimpuls erfolgen kann. Dieser Wechsel zwischen Druckaufbau und Druckhalten wird solange wiederholt, bis die Fahrzeugverzögerung nach dem Druckaufbaupuls nur noch wenig zugenommen hat. Man kann davon ausgehen, daß sich mehrere Räder im Bereich des Maximums der Schlupfkurve bewegen oder dieses bereits überschritten haben.

Durch die Wahl der Grenze kann in gewissem Maße festgelegt werden, ob das Blockieren von einem oder mehreren Rädern akzeptiert wird. Wenn die Untergrenze für die Ableitung der gefilterten Fahrzeugbeschleunigung nach einem Druckaufbaupuls nicht unterschritten wurde, dann baut der Regler, um die Seitenführungskraft zu erhöhen, Druck ab, bis weitgehend sichergestellt ist, daß sich die Räder im stabilen Bereich der Schlupfkurve befinden. Das wird durch eine plötzliche, starke Abnahme der Fahrzeugverzögerung erkannt, d.h. die Ableitung der gefilterten Fahrzeugbeschleunigung überschreitet eine vorgegebene Obergrenze. Nun kann sofort wieder Druck aufgebaut werden, und der ganze Vorgang wiederholt sich.

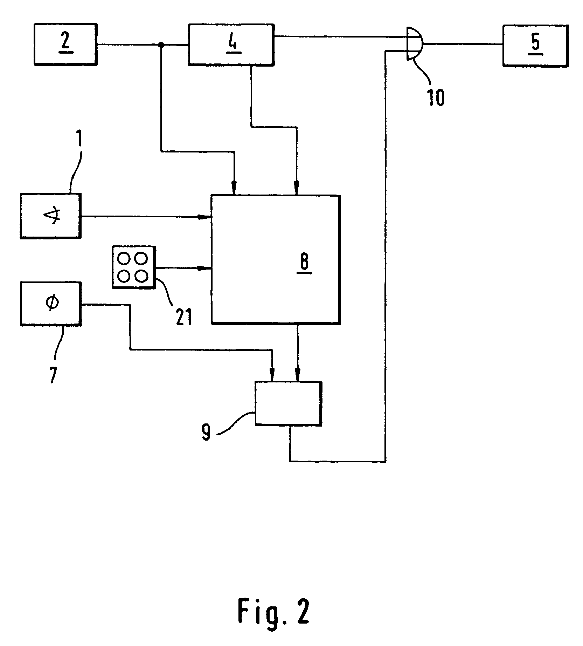

In Figur 2 ist die Reglerelektronik der Figur 1 noch einmal dargestellt. Es ist jedoch zusätzlich der überlagerte Regler gezeigt, der aus einem Lenkwinkelgeber 1, einem Meßwertgeber 7 für die Giergeschwindigkeit, einem Meßwertgeber 21 für die Rad-Drehzahlen, einer Auswerteschaltung 8 und einem Vergleicher 9 besteht.

Der Auswerteschaltung 8 wird neben den Signalen der Meßwertgeber 1, 7 und 21 a,b,c,d das Fahrzeugverzögerungssignal des Meßwertgebers 2 und eine die Fahrzeuggeschwindigkeit darstellende Größe zugeführt. Mittels der maximalen Fahrzeugverzögerung wird in der Auswerteschaltung 8 der vorhandene Reibwert abgeschätzt.

In der Auswerteschaltung 8 werden aus den Meßwerten die Grenzwertverläufe für die Giergeschwindigkeit in Abhängigkeit vom Lenkwinkel berechnet, wobei je nach Einschlagrichtung der Lenkwinkel und die resultierende Giergeschwindigkeit positiv oder negativ bezeichnet sind.

Erreicht bei einem bestimmten Lenkwinkel unter Berücksichtigung der herrschenden und der vorhandenen Fahrzeuggeschwindigkeit nicht die durch den Grenzwertverlauf gegebene Größe, so wird, um zu einer höheren Giergeschwindigkeit zu kommen, Druck abgebaut. Damit wird die Seitenführung und die Giergeschwindigkeit erhöht. Der dazu notwendige Vergleich zwischen gemessener Giergeschwindigkeit und dem errechneten Grenzwert wird im Vergleicher 9 vorgenommen, der dann ein Absenksignal über ein Oder-Gatter 10 an die Bremsdrucksteuereinrichtung 5 gibt. Als obere Vergleichsgröße wird eine Schwelle zur Verfügung gestellt. Wird sie von der gemessenen Giergeschwindigkeit überschritten, so wird, um ein Übersteuern zu vermeiden, Druck aufgebaut.

### Bezugszeichenliste:

- 2: Meßwertgeber für die Fahrzeugbeschleunigung in Längsrichtung
- 3: komplette Anlage
- 4: Schaltgerät auf Mikroprozessorbasis
- 5: Druckmodulator, Bremsdrucksteuereinrichtung
- 6: Bremsdruckminderer
- 7: Meßwertgeber für die Giergeschwindigkeit
- 8: Auswerteschaltung
- 9: Vergleicher
- 10: Oder-Gatter
- 20: a,b,c,d Rad
- 21: a,b,c,d Meßwertgeber für die Rad-Drehzahlen

## Patentansprüche

1. Verfahren zur Verbesserung des Regelverhaltens eines elektronisch geregelten gesteuerten ESP-Fahrstabilitätsregelungssystems bei niedrigen Außen- oder Betriebstemperaturen, bei dem aus dem Drehverhalten der Räder Eingangsgrößen für die Regelung abgeleitet werden und bei dem in für die Fahrstabilität kritischen Situationen die Fahrstabilität durch Bremsdruckeinsteuerung und/oder Bremsdruckmodulation in einer Bremsanlage erhöht wird, **dadurch gekennzeichnet, dass** aus dem Drehverhalten der Räder Kriterien zum Bewerten der Fahrsituation und zum frühzeitigen Ermitteln einer Fahrsituation mit einer erhöhten Gefährdung aus den Differenzen des Drehverhaltens der Räder untereinander abgeleitet werden, dass das relative Drehverhalten der einzelnen Räder mit vorgegebenen Schemata verglichen wird und dass beim Überschreiten vorgegebener Grenzwerte auf ein Erkennen einer Fahrsituation mit erhöhter Gefährdung geschlossen und ein Druckaufbau im hydraulischen Bremssystem vorbereitet wird.

2. Verfahren nach Anspruch 2, **dadurch gekennzeichnet, dass** die Grenzwerte durch die Fahrzeuggeschwindigkeit und durch Umgebungsparameter variiert werden.

3. Verfahren nach Anspruch 2, **dadurch gekennzeichnet, dass** ein Umgebungsparameter die Temperatur ist.

4. Verfahren nach einem der Ansprüche 1 bis 3, **dadurch gekennzeichnet, dass** zur Vorbereitung der Fahrstabilitätsregelung ein geringer Druckaufbau im Bremskreislauf erfolgt.

5. Bremsanlage mit einem ESP-Fahrstabilitätsregelungssystem, mit einer Regelungselektronik, mit Sensoren zur Messung der Raddrehzahl, der Gierrate und/oder der Querbeschleunigung und des Lenkwinkels des Kraftfahrzeugs, sowie einer von dem ESP-Fahrstabilitätsregelungssystem ansteuerbaren Hydraulikpumpe oder einem Bremskraftverstärker **dadurch gekennzeichnet, dass** die Regelungselektronik Schaltkreise und/oder Programmfunktionen umfaßt, die das mit den Sensoren (21) ermittelte relative Drehverhalten der einzelnen Räder (20) mit vorgegebenen Schemata vergleicht und beim Überschreiten vorgegebener Grenzwerte, die auf eine Fahrsituation mit erhöhter Gefährdung hinweisen, die Hydraulikpumpe (5) oder den Bremskraftverstärker ansteuern, wodurch ein Druckaufbau im hydraulischen Bremssystem vorbereitet wird.

6. Bremsanlage nach Anspruch 7, **dadurch gekennzeichnet, dass** die Hydraulikpumpe getaktet angesteuert wird.

## Claims

1. Method for improving the control behaviour of an electronically closed-loop or open-loop controlled ESP driving stability control system at low external temperatures or operating temperatures, in which method input variables for the control are derived from the rotational behaviour of the wheels, and in which, in situations which are critical for the driving stability, the driving stability is increased by applying brake pressure and/or brake pressure modulation in a brake system, **characterized in that** criteria for evaluating the driving situation and for early determination of a driving situation with a raised level of risk are derived from the rotational behaviour of the wheels, from the differences between the rotational behaviour of the wheels with respect to one another, **in that** the relative rotational behaviour of the individual wheels is compared with predefined schemes and **in that** when predefined limiting values are exceeded, it is concluded that a driving situation with a raised level of risk has been detected and an increase in pressure is prepared in the hydraulic brake system.

2. Method according to Claim 1, **characterized in that** the limiting values are varied by means of the velocity of the vehicle and by means of ambient parameters.

3. Method according to Claim 2, **characterized in that** one ambient parameter is the temperature.

4. Method according to one of Claims 1 to 3,
**characterized in that** a small increase in pressure in the brake circuit takes place in order to prepare the driving stability control.

5. Brake system having an ESP driving stability control system, having an electronic control system, having sensors for measuring the wheel speed, the yaw rate and/or the lateral acceleration and the steering angle of the motor vehicle, as well as a hydraulic pump which can be actuated by the ESP driving stability control system, or a brake booster, **characterized in that** the electronic control system comprises circuits and/or program functions which compare the relative rotational behaviour of the individual wheels (20), determined with the sensors (21), with predefined schemes, and when predefined limiting values which indicate a driving situation with a raised level of risk are exceeded, they actuate the hydraulic pump (5) or the brake booster, as a result of which an increase in pressure in the hydraulic brake system is prepared.

6. Brake system according to Claim 5, **characterized in that** the hydraulic pump is actuated in a clocked fashion.

## Revendications

1. Procédé pour améliorer le comportement de régulation d'un système de régulation de la stabilité de trajectoire ESP commandé à régulation électronique en présence de températures extérieures ou de fonctionnement basses, avec lequel des grandeurs d'entrée pour le régulateur sont dérivées du comportement de rotation des roues et avec lequel la stabilité de trajectoire dans les situations critiques pour la stabilité de trajectoire est accrue par un contrôle de la pression de freinage et/ou une modulation de la pression de freinage dans un équipement de freinage, **caractérisé en ce que** des critères d'évaluation de la situation de conduite et de détermination anticipée d'une situation de conduite présentant un risque accru en raison des différences de comportement de rotation des roues entre elles sont dérivés à partir du comportement de rotation des roues, que le comportement de rotation relatif des roues individuelles est comparé avec des schémas prédéfinis et qu'en cas de dépassement de valeurs limites prédéfinies, il est conclu à une détection d'une situation de conduite présentant un risque accru et une pressurisation du système de freinage hydraulique est préparée.

2. Procédé selon la revendication 1, **caractérisé en ce que** les valeurs limites varient en fonction de la vitesse du véhicule et des paramètres d'environnement.

3. Procédé selon la revendication 2, **caractérisé en ce qu'**un paramètre d'environnement est la température.

4. Procédé selon l'une des revendications 1 à 3, **caractérisé en ce qu'**une légère pressurisation dans le circuit de freinage a lieu pour préparer la régulation de la stabilité de trajectoire.

5. Équipement de freinage comprenant un système de régulation de la stabilité de trajectoire ESP, comprenant une électronique de régulation, comprenant des capteurs pour mesurer la vitesse de rotation des roues, le taux de lacet et/ou l'accélération transversale et l'angle de direction du véhicule automobile, ainsi qu'une pompe hydraulique ou un amplificateur de force de freinage pouvant être commandé par le système de régulation de la stabilité de trajectoire ESP, **caractérisé en ce que** l'électronique de régulation comprend des circuits de commutation et/ou des fonctions de programme qui comparent le comportement de rotation relatif des roues individuelles (20), déterminé avec les capteurs (21), avec des schémas prédéfinis et qui, en cas de dépassement de valeurs limites prédéfinies qui signalent une situation de conduite à risque accru, commandent la pompe hydraulique (5) ou l'amplificateur de force de freinage, ce qui prépare une pressurisation du système de freinage hydraulique.

6. Équipement de freinage selon la revendication 5, **caractérisé en ce que** la pompe hydraulique est commandée de manière cadencée.
